# EUROPÄISCHE PATENTANMELDUNG

(11) **EP 2 759 193 A1**
(43) Veröffentlichungstag der Anmeldung: **30.07.2014**
(21) Anmeldenummer: 14405001.0
(22) Anmeldetag: 03.01.2014
(51) Int. Cl.: A01D 90/02, A01D 90/10

(54) **Fahrbares Ladegerät für die Bergung und den Transport von landwirtschaftlichem Halmgut**

(30) Priorität: 27.01.2013 CH 3502013
(71) Anmelder: Lüönd & Co. AG, 8842 Unteriberg (CH)
(72) Erfinder: Lüönd, Karl, CH-8842 Unteriberg (CH)
(74) Vertreter: Fenner, Werner

(57) **Zusammenfassung**

Ein fahrbares Ladegerät (1) für die Bergung und den Transport von landwirtschaftlichem Halmgut (60) wie Gras oder Heu, mit einer heckseitig gemähtes Halmgut vom Boden aufnehmenden und in einen auf einem Fahrgestell aufgebauten Laderaum (2) fördernden Fördereinrichtung (3), an deren förderstromaufwärts liegendem Ende beim Laden eine auf einer Abstützvorrichtung (4), quer zur Fortbewegungsrichtung (F) über den Boden geführte, mit über den Umfang einer Führungsanordnung (6) förderwirksam vorstehende Förderzinken (7) aufweisende, teilweise oberschlächtig wirkende Fördertrommel (8), und einem förderstromabwärts der Fördertrommel (8), mit einem etwa aufrecht stehenden Schutzgitter (9) einen in den Laderaum (2) resp. auf einen mit einem vor- oder rückwärts zur Fortbewegungsrichtung (F) umlaufend antreibbaren Kratzboden (10) ausgebildeten Laderaumboden (11) mündenden Förderkanal (12) bildenden Förderrotor (13), wobei die Fördertrommel (8) förderwirksam auf die Höhe des Laderaum-(11) resp. Kratzbodens (10) förderwirksam anhebbar ist und durch Schwenken des förderwirksamen Umfangsbereichs resp. der Führungsanordnung um die Rotationsachse (23) der Förderzinken (7) in eine Entladeposition verstellbar ist.

## Beschreibung

Die Erfindung betrifft ein fahrbares Ladegerät für die Bergung und den Transport von landwirtschaftlichem Halmgut wie Gras oder Heu, mit einer heckseitig gemähtes Halmgut vom Boden aufnehmenden und in einen auf einem Fahrgestell aufgebauten Laderaum fördernden Fördereinrichtung, an deren förderstromaufwärts liegendem Ende beim Laden eine auf einer Abstützvorrichtung, quer zur Fortbewegungsrichtung über den Boden geführte, mit über den Umfang einer Führungsanordnung förderwirksam vorstehende Förderzinken aufweisende, teilweise oberschlächtig wirkende Fördertrommel, und einem förderstromabwärts der Fördertrommel, mit einem etwa aufrecht stehenden Schutzgitter einen in den Laderaum resp. auf einen mit einem vor- oder rückwärts zur Fortbewegungsrichtung umlaufend antreibbaren Kratzboden ausgebildeten Laderaumboden mündenden Förderkanal bildenden Förderrotor.

Ein mit Swiss Granit bezeichneter Hecklader der Anmelderin nach der eingangs beschriebenen bekannten Bauart weist an der Heckseite des Laderaumes über einer Aufnahmetrommel, auch Pic-up bezeichnet, ein Schutzgitter auf, das beim Beladen des Laderaumes an der Rückseite des Ladegerätes einen Förderkanal für das zugeführte Futter dient und beim Entladen des Erntegutes um eine rotierende Achse nach hinten umgelegt wird, sodass das Halmgut durch den fördernd rückwärts laufenden Kratzboden des Laderaumes über eine schräg nach unten zum Boden gerichtete Rampe ausgestossen wird.

Bei diesem Entladevorgang bleibt das Erntegut auf der Rampe liegen resp. baut sich auf der Rampe auf, sodass das Fahrzeug während dem Entladen vorwärts bewegt werden muss, um den Laderaum teilweise oder vollständig entladen zu können.

Bei einer Entleerung des Laderaums muss das Schutzgitter unter dem Futterhaufen herausgezogen werden.

Die vorveröffentlichte CH 495 693 beschreibt einen Transportwagen für Massengüter, wie z. B. auf dem Feld liegendes Heu oder Gras u.s.w., mit einem schwenkbaren Apparat, der je nach seiner Schwenklage als Lade- bzw. Entladevorrichtung, und mit einem Kanal zwischen dem Apparat und dem als Kratzboden ausgebildeten Wagenboden, durch welchen Kanal der Apparat das zu ladende und zu transportierende Gut nach oben fördert, wobei sich eine Schwenkachse des Apparates im Bereich des Kanals befindet. Der für das Laden und Entladen des Halmgutes vorgesehene Apparat besteht aus einer Vielzahl notwendiger Teile und Komponenten, die ein- und zu verstellen sind und ein hohes Gewicht ausmachen, die hohe Konstruktionskosten und das Fahrzeug heckseitig treffen sowie die Manövrierbarkeit einschränken.

Es ist Aufgabe der vorliegenden Erfindung, ein fahrbares Ladegerät zur Bergung und den Transport von landwirtschaftlichem Halmgut sowie der Entleerung des Laderaumes des Ladegerätes nach der eingangs genannten Art zu schaffen, mit dem die erwähnten Umstände und Mängel behoben sind.

Erfindungsgemäss wird die Aufgabe dadurch gelöst, dass die Fördertrommel auf die Höhe des Laderaum- resp. Kratzbodens förderwirksam anhebbar ist und durch Schwenken des förderwirksamen Umfangsbereichs resp. der Führungsanordnung um die Rotationsachse der Förderzinken in eine Entladeposition verstellbar ist.

Vorzugsweise erfolgt die Verstellbewegung der Fördertrommel in die Entladeposition des Ladegerätes durch eine Hebebewegung, die eine einfache Aufzugsvorrichtung gestattet.

Zweckmässig sind die in einem Förderbereich der Fördertrommel über einen Teilumfang der Führungsanordnung in Reihen neben- und hintereinander vorstehenden Förderzinken von Führungs- oder Lamellenbändern seitlich flankiert, sodass an diesen das Halmgut geführt und beim Weitertransport von den Förderzinken entfernt werden kann, wodurch ein störungsfreier Fluss des Halmguts entstehen kann.

Vorteilhaft ist die aus Führungs- oder Lamellenbändern gebildete Führungsanordnung um die Drehachse der der Fördertrommel schwenkbar ausgebildet, um in der Aufnahmeposition oder der Entladeposition unterschiedliche Stellungen einnehmen zu können.

Es erweist sich als Vorteil, wenn ein förderwirksamer Umfangsbereich der Fördertrommel in deren Ladeposition dem Förderkanal zugewandt ausgebildet ist, sodass ein reibungsloser Förderfluss entstehen kann.

In diesem Zusammenhang kann der förderwirksame Führungsbereich der Fördertrommel den Förderkanal ergänzen.

Der einfachheitwegen kann das Schutzgitter beim Beladen des Laderaumes an dem unteren Ende mit der Fördertrommel zur Führung des Förderstroms verriegelt und beim Entladevorgang des Laderaumes von der Fördertrommel entriegelt und über die Entladeöffnung des Laderaumes hinaus anhebbar ausgebildet sein.

Zur Unterstützung des Entladevorgangs ist der förderwirksame Umfangsbereich der Fördertrommel in der Entladeposition des Ladegerätes in dem durch den Kratzboden erzeugten Entladestrom des Halmgutes angeordnet.

Zur Begünstigung oder Unterstützung des Entladestromes des Halmguts kann zwischen Kratzbodenende und förderwirksamem Umfangsbereich der Fördertrommel ein den Entladestrom an der Unterseite stützendes, vorzugsweise zustell- oder zuschaltbares Führungsmittel angeordnet sein.

Alternativ kann der Kratzboden zur Entladeöffnung des Laderaumes hin in einer vorzugsweise seitlichen Führungsanordnung verstellbar ausgebildet sein.

Als weitere Möglichkeit zur Unterstützung des Entladestromes können der Förderrotor und/oder dem Kratzbodenende förderwirksam resp. dem Entladestrom mit der Rückseite zustellbare Messer die Führungsmittel bilden.

Bei einem Ladegerät mit einem den Laderaum heckseitig begrenzenden Hecktor, das für ein Entladen des Laderaumes um eine horizontale Achse hochschwenkbar ist, sind das anhebbare Schutzgitter und das Hecktor beim gemeinsamen Hochschwenken zweckmässig an der Unterseite verriegelt und bei die Entladeöffnung schliessendem Hecktor voneinander entriegelbar sind.

Der einfachheithalber ist die Fördertrommel beidseits über ein Zugmittel hydraulisch anheb- und absenkbar ausgebildet.

Hierzu bewährt sich eine einfache Vorrichtung, wenn die Fördertrommel beidseits an mit einem Traggestell des Laderaumes verbundenen Schwenkarmen an- und absenkbar ausgebildet ist.

Bei dem anforderungsreichen Betrieb eines Ladegerätes, erweist sich eine Kette oder ein Seil als Zugmittel für den Fördertrommelaufzug als zweckmässig und unterhaltsfreundlich.

Für das Öffnen und Schliessen des Laderaumes durch das mit dem Schutzgitter verriegelte Hecktor ist vorzugsweise ein Hebelgetriebe vorgesehen, dessen Betätigung mit hydraulischer Kraft resp. Unterstützung vorgenommen wird, um beide Teile schonend bewegen zu können.

Es erweist sich als vorteilhaft, wenn die Hebelgetriebe jeweils an der Aussenseite gegenüberliegender Seitenwände des Laderaumes angeordnet und durch eine dem Hecktor zugeordnete obere Verbindungstraverse verbunden sind, sodass Hecktor und Schutzgitter eine kompakte Einheit bilden.

Zur Meidung verbogener Förderzinken durch die Last des zu transportierenden Halmguts ist es zweckmässig, den Förderzinken der Fördertrommel in Rotationsrichtung betrachtet einen etwa radial abstehenden, vorzugsweise starren Stützfinger vorzuschalten, dessen Länge geringer als diejenige der Förderzinken ist, um so die Belastung besser verteilen zu können.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung eines erfindungsgemässen fahrbaren Ladegerätes in der Entladeposition,
- Fig. 2: einen Längsschnitt durch das in Fig. 1 dargestellte Ladegerät in der Ladeposition,
- Fig. 3: einen Längsschnitt durch das in Fig. 1 dargestellte Ladegerät in der Transportposition,
- Fig. 4: einen Längsschnitt durch das in Fig. gezeigte Ladegerät in der Entladeposition,
- Fig. 5: eine auszugsweise Darstellung einer Aufzugsvorrichtung der Fördertrommel des in Fig. 1 dargestellten Ladegerätes und
- Fig. 6: eine auszugsweise räumliche Darstellung der Fördertrommel.

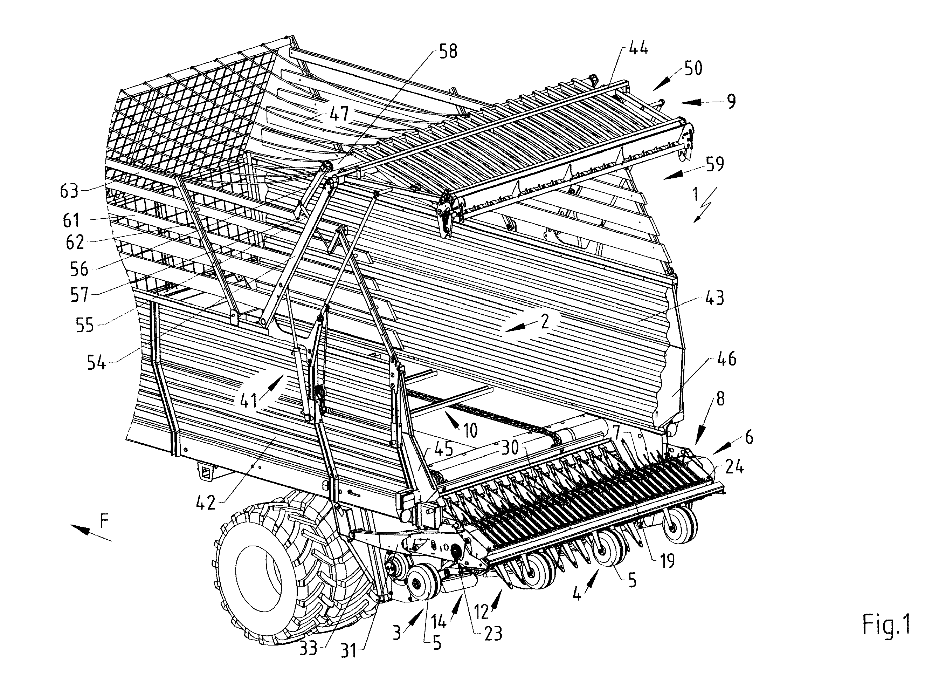

Die Fig. 1 veranschaulicht ein erfindungsgemässes Ladegerät -von der Heckseite aus betrachtet- zur Bergung und zum Transport sowie zum Entladen von landwirtschaftlichem Halmgut 60, beispielsweise Gras, Heu oder dgl., mit einer heckseitig das gemähte Halmgut 60 vom Boden aufnehmenden und in einem auf einem Fahrgestell eines selbstfahrenden Fahrzeuges aufgebauten Laderaum 2 fördernden Fördereinrichtung 3, an deren förderstromabwärts liegenden Ende beim Laden eine auf einer Abstützvorrichtung 4 mit mehreren Laufrollen 5 oder Gleitkufen ein Fahrwerk bildend, quer zur Fortbewegungsrichtung F über den Boden geführte, mit über den Umfang einer Führungsanordnung 6 förderwirksam vorstehende Förderzinken 7 aufweisende, teilweise oberschlächtig wirkende Fördertrommel 8, auch als Pic-up-Trommel bezeichnet, und einem förderstromabwärts der Fördertrommel 8, mit einem etwa senkrecht stehenden Schutzgitter 9 einen in den ein Hecktor 50 aufweisenden Laderaum 2 resp. auf einen mit einem vor- und rückwärts zur Fortbewegungsrichtung F umlaufend antreibbaren Kratzboden 10 ausgebildeten Laderaumboden 11 mündenden Förderkanal 12 bildenden Förderrotor 13.

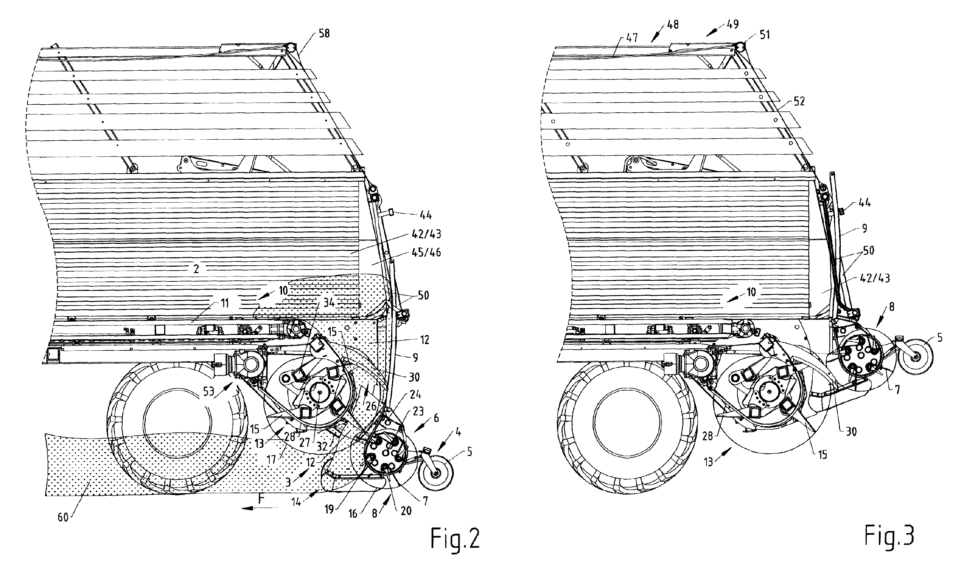

Fig. 2 zeigt das Zusammenwirken der an der Fördereinrichtung 3 beteiligten Förderkomponenten in der Aufnahme- oder Ladeposition, in der die Fördertrommel 8 der Fördereinrichtung 3 durch die mit mehreren auf dem Boden aufstehenden Laufrollen 5 ausgebildete Abstützvorrichtung 4 fahrbar aufliegt. Erkennbar ist eine seitlich angeordnete Führungsvorrichtung 14, die die Trennung von auf dem Boden liegendem zu erfasstem Halmgut 60 unterstützt. Die Fördertrommel 8, die bei Betrachtung der Fig. 1 und 2 im Uhrzeigersinn rotierend angetrieben ist, bebt das Halmgut durch die umlaufenden Förderzinken 7 vor sich an und transportiert es in den Wirkbereich des Förderrotors 13, der in Abstimmung mit der Fördertrommel 8 im Gegenuhrzeigersinn angetrieben ist. Sowohl die Förderzinken 7 der Fördertrommel 8 als auch die Förderzähne 15 des Förderrotors 13 sind vorzugsweise nach den unregelmässig verlaufenden Bahnen 16 und 17 gesteuert, sodass sie einerseits auf das Halmgut 60 fördernd und mit den Führungsanordnungen 6 resp. 18 das Halmgut abstreifend zusammenwirken.

Die Führungsanordnung 6 der Fördertrommel 8 besteht aus führungs- oder Lamellenbändern 19, die zwischen den in Reihen neben- und hintereinander vorstehenden Förderzinken 7 der Fördertrommel 8 angeordnet sind und das aufgenommene Halmgut 60 führen, das beim Verlassen des förderwirksamen Umfangsbereichs von den Führungsbändern 19 durch die unter letztere eintauchenden Förderzinken 7 von der Fördertrommel 8 zum Weitertransport durch den Förderrotor 13 abgestreift werden.

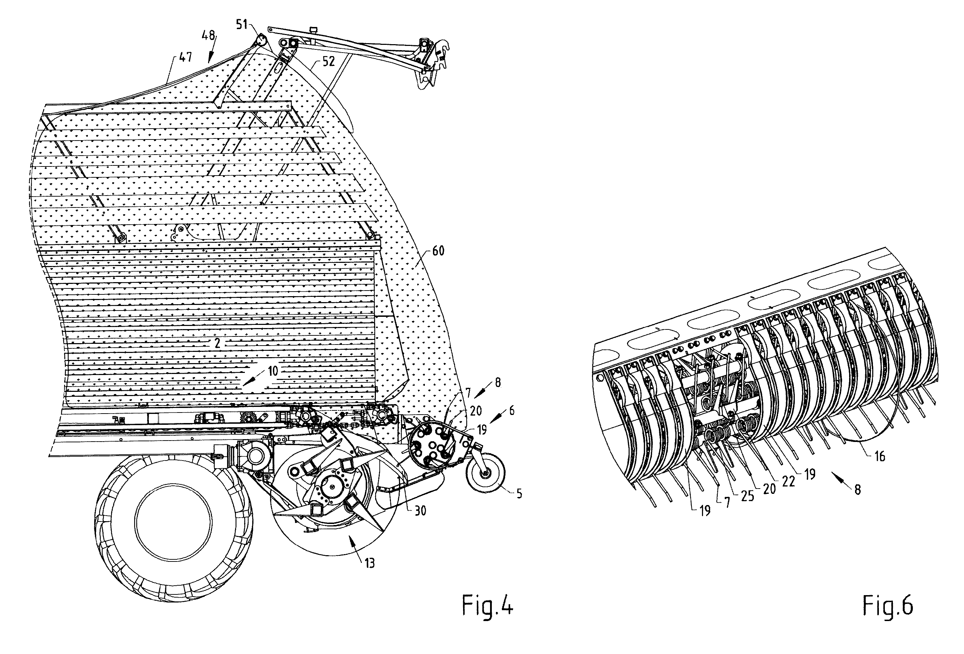

Damit der Druck des Halmguts 60 auf die federnd resp. nachgiebig ausgebildeten Förderzinken 7 keine Verbiegung letzterer auslösen, kann vorzugsweise den Förderzinken 7 ein Stützfinger 20 (siehe Fig. 2 bis 6) geringerer Länge als die Förderzinken 7 zugeordnet sein, der ein Teil der Belastung durch das Halmgut 60 übernimmt. Die Stützfinger 20 sind -wie Fig. 6 zeigt- an jeweils einem mit den rotierenden Förderzinken 7 versehenen Querleisten 21 verbundenen Platten 22 befestigt. Die Führungsbänder laufen konzentrisch in wenigstens einem Halbkreis um die Achse 23 der Fördertrommel 8 und sind mit den Enden an einem Querbalken 24 befestigt, sodass sie einen Schutzkorb an der umlaufenden Fördertrommel 8 bilden, der zum Zweck einer Änderung der Funktion des Ladegerätes resp. dessen Position konzentrisch zur Rotationsachse der Fördertrommel 8 schwenkbar gelagert ist. Fördertrommel und Führungsanordnung bilden eine funktionell verstellbare Einheit.

Fig. 6 zeigt hinter dem entfernten Führungsband 19 an der um die Achse 23 umlaufenden Querleiste 21 paarweise mit Torsionsfedern 25 ausgebildete, befestigte Förderzinken 7 und den Förderzinken 7 paarweise zugeordnete Stützfinger 20, die auf der gegenüberliegenden Seite der Querleiste 21 mittels Platte 22 gemeinsam an letzterer befestigt sind.

Fig. 6 zeigt weiterhin die unregelmässig gekrümmt verlaufende Umlaufbahn 16 der Förderzinkenspitzen.

Die verstellbare Fördertrommel 8 ist zur Bildung eines Förderstroms, Pfeil 26 in Fig. 2, des vom Boden aufgenommenen Halmguts 60 in den Laderaum 2 förderwirksam mit dem Förderrotor 13 verbunden, der an dem aufgebauten Laderaum 2 befestigt resp. mit dem Laderaumboden 11 fest verbunden ist.

Der Förderrotor 13 dreht bei Betrachtung der Fig. 1 bis 4 im Gegenuhrzeigersinn und weist vorliegend vier Förderzähne 15 auf, die bei ihrem Umlauf um die quer zur Fortbewegungsrichtung F angeordnete Rotationsachse 27 aus einer Ruhestellung, in der sie radial nach innen zurückgeschwenkt sind, in eine Förderstellung schwenkbar gesteuert sind. D.h., sobald sich die Förderzähne 15 dem Wirkbereich der Fördertrommel 8 nähern, nehmen sie eine annähernd radiale Stellung ein, in der sie das Halmgut 60 von der Fördertrommel 8 übernehmen, deren Förderzinken 7 sich nun in eine unwirksame Lage gesteuert zurückschwenken und erst wieder in eine Rechposition versetzt werden, wenn sie sich dem Boden wieder nähern. Die Förderzähe 15 des Förderrotors 13 sind an schwenkbaren Wellen 34 befestigt, die jeweils durch einen nicht sichtbaren, an oder in einer um die Rotationsachse 27 angeordnete Steuerbahn geführten Steuerhebel bei angetriebenem Förderrotor 13 schwenkbar gesteuert sind.

Zwischen den Förderzähnen 15 des Förderrotors 13 sind -wie schon bei der Fördertrommel 8- Führungsbänder 28 angeordnet, die im Förderbereich den Förderkanal 12 einseitig begrenzen und dafür sorgen, dass das Halmgut 60 sich nicht um die Welle des Förderrotors 13 wickelt und den Fördervorgang nicht hindert.

Auf die Förderstrombreite betrachtet greifen die Förderzähne 15 des Förderrotors 13 jeweils zwischen zwei sich im Förderbereich befindende Förderzinken 7 der Fördertrommel 8 ein, sodass ein kontinuierlicher Fluss des Förderstroms 26 gewährleistet ist.

Der Förderkanal 12 wird nach dem Förderbereich der Fördertrommel durch den Förderrotor 13 und das Schutzgitter 9 in Förderstromrichtung 26 fortgesetzt. Das Schutzgitter ist an der Unterkante mit der Fördertrommel 8 führungswirksam resp. übergangsfrei verbunden resp. verriegelt, d.h., die Schutzgitterstäbe 29 schliessen mit ihren unteren Enden an die Führungsbänder 19 der Fördertrommel 8 an. Hierzu nimmt die der Fördertrommel 8 zugeordnete Führungsanordnung 6 aus Führungs- oder Lamellenbändern 19 eine Ladestellung ein (siehe Fig. 2), in der der förderwirksame Umfangsbereich der Führungstrommel 8 dem Förderkanal 12 zugewandt ist. Dabei ragen die Endabschnitte der Führungsbänder 19 nach oben, wobei die dem Förderkanal 12 zugewandten Führungsbandabschnitte den Förderkanal 12 unterhalb des Schutzgitters 9 ergänzen.

Bei der beispielhaften Ausführung eines Ladegerätes 1 gemäss Fig. 2 wird der über die Laderaumbreite sich erstreckende Förderkanal 12 durch eine Reihe nebeneinander angeordneter Messer 30 durchsetzt, die das Halmgut 60 des Förderstroms 26 zerkleinern. Das Schneiden des Halmguts wird durch ein Zusammenwirken der Förderzähne 15 des Förderrotors 13 mit den den Förderkanal 12 durchsetzenden Messern 30 erreicht. Anschlissend wird das verkürzte Halmgut 60 durch die Förderzähne 15 des Förderrotors 13 weiter nach oben in den Förderbereich des Kratzbodens 10 gedrückt, wo es von diesem erfasst und in den Laderaum 2 transportiert wird.

Zur Änderung der Fördertrommel-Position ist die Fördertrommel 8zwischen zwei Schenkarmen 31, 32, die beidseits an einem Traggestell 33 des Ladegerätes 1 angeordnet und insbesondere zur Höhenverstellung der Fördertrommel 8 schwenkbar sind.

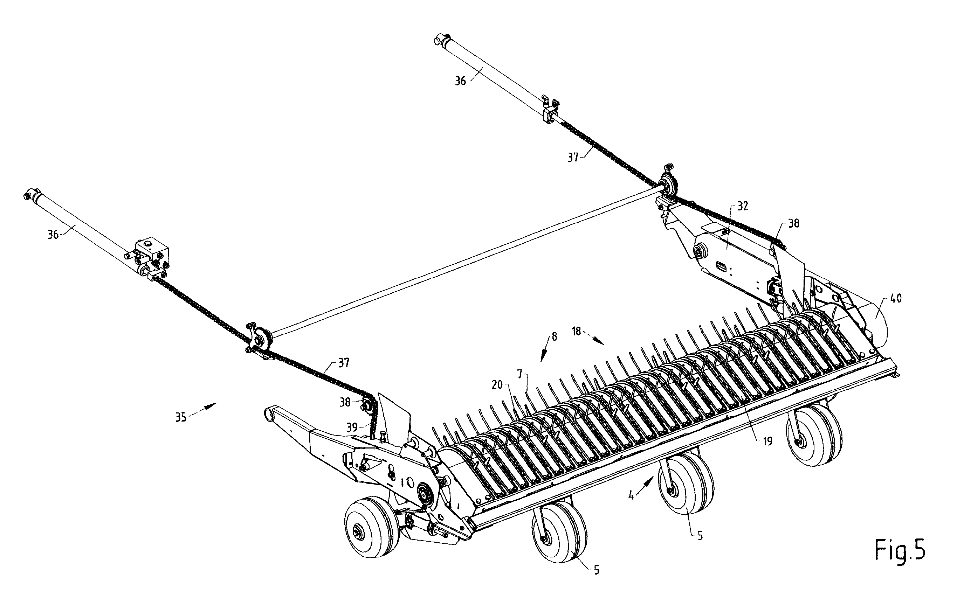

Die Verstellbarkeit der Fördertrommel 8 erfolgt durch eine Verstellvorrichtung 35, die in Fig. 5 veranschaulicht ist. Entlang der Unterseite des Laderaumbodens 11 sind beidseits zwei hydraulische Kolben-Zylinder-Einheiten 36 angeordnet, die gemeinsam von einem Wegeventil (nicht ersichtlich) angesteuert werden. An einem beweglichen Teil der Kolben-Zylinder-Einheit 36 ist jeweils ein Zugmittel 37, Kette oder Seil befestigt, das am gegenüberliegenden Ende an dem Schwenkarm 31, 32 befestigt ist und an einer Umlenkrolle 38 geführt ist, sodass ein etwa senkrechter Zugmittelstrang 39 entsteht. Der in Fortbewegungsrichtung F rechte Schwenkarm 32 weist die Antriebsmittel (teilweise ersichtlich) der Fördertrommel 8 auf, die mit dem Förderrotor 13 antriebsverbunden ist und die von der Schutzhaube 40 geschützt sind. Die Fördertrommel 8 befindet sich in Fig. 5 in der Entladeposition des Ladegerätes.

In Fig. 1 ist eine weitere seitliche Laufrolle 5 eines Laufrollenpaares erkennbar, das eine vordere Abstützung zu den nachlaufenden drei Laufrollen eines Fahrwerks der Fördertrommel 8 nach dem Tandem-Prinzip bildet.

Fig. 3 stellt den Ladegerät-Aufbau in der Transportposition dar, in der die Fördertrommel 8 angehoben resp. aufgezogen ist. Fig. 3 veranschaulicht auch die Stellung der Fördertrommel 8 in der Transportstellung, in der der förderwirksame Umfangbereich nach unten gerichtet ist. In die Ruheposition ist das Hecktor 50 geschlossen und mit dem Fahrgestell des Ladegerätes verriegelt. Das bei der Halmgutaufnahme zur Führung des Halmguts 60 im Förderkanal 12 vorgesehene Schutzgitter 9 ist mit der Fördertrommel 8 lösbar verriegelt und durch die Fördertrommel 8 in die Transportposition des leeren oder beladenen Ladegerätes 1 angehoben.

Weiterhin zeigt der Längsschnitt des Ladegerätes in Fig. 3 ein jeweils am hinteren Ende der Seitenwände 42, 43 befestigte Abschlusselemente 45, 46, die den seitlichen Zugang zur Fördereinrichtung 3 bei geschlossenem Hecktor 50 verhindern. Die beispielsweise aus mehreren gestreckten Seilen 47 gebildete obere Laderaumbegrenzung 48 ist bei geschlossenem Laderaum 2 durch das geschlossene Hecktor 50 und eine zusätzliche Vorrichtung 49 gespannt. An der Spannvorrichtung 49 ist ein schwenkbares Befestigungsrohr 51 für eine einseitige Befestigung der Laderaumbegrenzung 48 vorgesehen, an der die Seile 47 einenends, und anderenends am oberen Ende einer vorderen Laderaumwand (nicht ersichtlich) befestigt sind. Das Befestigungsrohr 51 dient gleichzeitig der Befestigung einer flexiblen Rückwand resp. Abdeckung oder hinteren Laderaumdecke 52, die oberhalb des geschlossenen Hecktors 50 und mit diesem verbunden eine gestreckte hintere Laderaumdecke 52 bildet. Die Laderaumdecke 52 besteht vorzugsweise aus einer verstärkten, beispielweise armierten Kunststofffolie.

In den Fig. 2 und 3 ist ein Hauptantrieb 53 für die Fördereinrichtung 3 zu erkennen. Eine nicht dargestellte Hauptwelle verbindet das Hauptgetriebe 53 mit dem Antriebsmotor des fahrbaren Ladegerätes 1, wobei eine quer zur Fortbewegungsrichtung gerichtete Antriebswelle mittels Winkelgetriebe von der Hauptwelle angetrieben wird und mit der Antriebswelle der Fördertrommel 8 und dem Förderrotor 13 jeweils zugeordnete Kettengetriebe zum Antrieb vorgesehen sind.

Fig. 1 zeigt den heckseitig geöffneten Laderaum 2 und die durch jeweils an den Aussenseiten der Seitenwände 42, 43 angeordneten, hydraulisch über Hebelgetriebe 41 gemeinsam hochgeschwenkten Hecktor 50 und Schutzgitter 9.

Fig. 4 stellt das Ladegerät 1 in einem Längsschnitt durch den Laderaum 2 in der Entladeposition gemäss Fig. 1 dar. Hierzu sind Hecktor 50 und Schutzgitter 9 durch das hydraulisch antreibbare Hebelgetriebe 41 über die Hecköffnung des Laderaumes 2 angehoben, sodass der Kratzboden10 das Halmgut 60 an der Unterseite erfassen und aus dem Laderaum 2 transportieren kann.

Zu diesem Zweck kann der Förderrotor 13 stillstehen und das Halmgut wird durch den Kratzboden 10 über den Förderrotor 13 hinweg zur angehobenen resp. aufgezogenen Fördertrommel 8 geführt, die in die Entladeposition aufgefahren ist, so dass der Entladestrom des Halmgutes über sie hinweg versetzt wird. Zur Unterstützung des Förderstromes könnte der Förderrotor 13 auch in Laderichtung angetrieben werden, so dass der Entladestrom durch die Förderzähne 15 periodisch angehoben wird, um die Reibung zu mindern. Der förderwirksame Umfangsbereich der Fördertrommel 8 ist nach einer Verdrehung in Entladerichtung in die Entladeposition (vorliegend etwa 90° gemäss Fig. 4) nach oben gerichtet, sodass der aus dem Laderaum 2 austretende/ankom-mende Halmgutstrom von der Fördertrommel 8 erfasst und in eine Futterkrippe, einen fahrbaren Futterbehälter oder auf den Boden weitertransportiert wird. Die Rotationsbewegung der Fördertrommel 8 entspricht der Drehrichtung bei der Aufnahme des Halmguts vom Boden und die Führungsanordnung 6 nimmt eine um etwa 90° im Uhrzeigersinn verdrehte Stellung ein, so dass die Förderzinken 7 von unten in den Futterstrom eintauchen und nach Überqueren der Fördertrommel 8 aus dem Futterstrom förderwirksam austreten. Dabei bieten die zusätzlichen Stützfinger 20 wiederum eine Entlastung der Förderzinken 7.

Alternativ könnte für das Entladen des Laderaumes zur Verkürzung des Abstandes zwischen Kratzbodenende und förderwirksamem Umfangsbereich der Fördertrommel 8 der Kratzboden 10 durch eine hydraulische Kraft gegen die Fördertrommel 8 im Traggestell 33 längsverschoben resp. nach hinten verschoben werden.

Die Fig. 1 bis 4 zeigen einen auf den vollwandigen Seitenwänden 42, 43 aufgesetzten Dörrfutteraufsatz 59, der vornehmlich bei der Aufnahme von getrocknetem (leichterem) Ladegut resp. Halmgut 60, wie beispielsweise Heu, in die dargestellte Position angehoben werden kann.

Die den Dörrfutteraufsatz 59 bildenden, übereinander an schwenkbaren Holmen 62 gelagerten Aufsatzleisten 61 können einerseits zur Erhöhung der Seitenwände 42, 43 abgesenkt werden oder zur Erhöhung des Laderaumes 2, vornehmlich bei der Aufnahme von getrocknetem Halmgut 60 resp. Futter angehoben werden.

Vorliegend ist die jeweils aus einem vorzugsweise rechteckigen Metallrohr gebildete obere Aufsatzleiste 63 zur schwenkbaren Anordnung des Befestigungsrohres 51 für die obere Laderaumbegrenzung 48 bildenden Seile 47 und die hintere Laderaumdecke 52 einer Spannvorrichtung 49 vorgesehen. Letztere besteht aus zwei sich seitlich gegenüberliegenden Schwenkhebeln 56, die von einer Gasdruckfeder 55 zur Lockerung der Ladebegrenzung 48 nach oben geschwenkt (siehe Fig. 1 und 4) resp. mit Hilfe der Schliessbewegung des Hecktors 50 gegen die Kraft der Gasdruckfeder 55 nach unten geschwenkt wird, sodass die mit einer Endschlaufe 58 an dem Befestigungsrohr 51 einenends festgehaltene hintere Laderaumdecke 52 gespannt ist. Beim Öffnen des Hecktors 50 wird die hintere Laderaumdecke schlaufenartig zurückgelegt (siehe Fig. 4) und die obere Laderaumbegrenzung 48 durch die auf die Spannvorrichtung 49 wirkende Gasdruckfeder 55 gelöst und über der Entladeöffnung des Laderaums 2 angehoben, sodass im Bereich der Entladeöffnung der Druck des Halmguts 60 auf Kratzboden 10, Förderrotor 13 und/oder Fördertrommel 8 gemindert wird.

Hecktor 50 und das mit diesem bei den Bewegungen jeweils verriegelte Schutzgitter 9 werden gemeinsam an den über die Seitenwände 42, 43 mit dem Traggestell 33 des Ladegerätes 1 verbundenen Torarme 54 in die Schliess- resp. Offenstellung geschwenkt.

## Patentansprüche

1. Fahrbares Ladegerät (1) für die Bergung und den Transport von landwirtschaftlichem Halmgut (60) wie Gras oder Heu, mit einer heckseitig gemähtes Halmgut vom Boden aufnehmenden und in einen auf einem Fahrgestell aufgebauten Laderaum (2) fördernden Fördereinrichtung (3), an deren förderstromaufwärts liegendem Ende beim Laden eine auf einer Abstützvorrichtung (4), quer zur Fortbewegungsrichtung (F) über den Boden geführte, mit über den Umfang einer Führungsanordnung (6) förderwirksam vorstehende Förderzinken (7) aufweisende, teilweise oberschlächtig wirkende Fördertrommel (8), und einem förderstromabwärts der Fördertrommel (8), mit einem etwa aufrecht stehenden Schutzgitter (9) einen in den Laderaum (2) resp. auf einen mit einem vor- oder rückwärts zur Fortbewegungsrichtung (F) umlaufend antreibbaren Kratzboden (10) ausgebildeten Laderaumboden (11) mündenden Förderkanal (12) bildenden Förderrotor (13), **dadurch gekennzeichnet, dass** die Fördertrommel (8) auf die Höhe des Laderaum-(11) resp. Kratzbodens (10) förderwirksam anhebbar ist und durch Schwenken des förderwirksamen Umfangsbereichs resp. der Führungsanordnung um die Rotationsachse (23) der Förderzinken (7) in eine Entladeposition verstellbar ist.

2. Ladegerät nach Anspruch 1, **dadurch gekennzeichnet, dass** die Schwenkbewegung der Fördertrommel (8) in die Entladeposition durch eine Hebebewegung erfolgt.

3. Ladegerät nach Anspruch 1 oder 2, **dadurch gekennzeichnet, dass** die in einem Förderbereich der Fördertrommel (8) über einen Teilumfang der Führungsanordnung (6) in Reihen neben- und hintereinander vorstehenden, vorzugsweise gesteuerten Förderzinken (7) von Führungs- oder Lamellenbändern (19) seitlich flankiert sind, an denen das Halmgut (60) geführt und beim Weitertransport von den Förderzinken (7) abgestreift resp. befreit wird.

4. Ladegerät nach Anspruch 3, **dadurch gekennzeichnet, dass** die aus Führungs- oder Lamellenbändern (19) gebildete Führungsanordnung (6) um die Achse (23) der Fördertrommel (8) schwenkbar ausgebildet ist.

5. Ladegerät nach einem der Ansprüche 1 bis 4, **dadurch gekennzeichnet, dass** ein förderwirksamer Umfangsbereich der Fördertrommel (8) in deren Ladeposition dem Förderkanal (12) zugewandt ist.

6. Ladegerät nach Anspruch 4 oder 5, **dadurch gekennzeichnet, dass** die Führungsbänder (19) mit einem förderunwirksamen Führungsbereich der Fördertrommel (8) den Förderkanal (12) ergänzen.

7. Ladegerät nach einem der Ansprüche 1 bis 6, **dadurch gekennzeichnet, dass** das Schutzgitter (9) beim Beladen des Laderaumes (2) an dem unteren Ende mit der Fördertrommel (8) verriegelt und beim Entladen des Laderaumes (2) von der Fördertrommel (8) entriegelt ist und über die Entladeöffnung des Laderaumes (2) anhebbar ist.

8. Ladegerät nach einem der Ansprüche 1 bis 7, **dadurch gekennzeichnet, dass** das Schutzgitter (9) in der Entladeposition der Fördertrommel (8) von dieser entriegelbar und in eine Entladeposition anhebbar ist.

9. Ladegerät nach einem der Ansprüche 3 bis 8, **dadurch gekennzeichnet, dass** der förderwirksame Umfangsbereich der Fördertrommel (8) in der Entladeposition in dem durch den Kratzboden (10) erzeugten Entladestrom angeordnet ist.

10. Ladegerät nach einem der Ansprüche 1 bis 9, **dadurch gekennzeichnet, dass** zwischen dem Kratzbodenende und dem förderwirksamen Umfangsbereich der Fördertrommel (8) ein den Entladestrom des Halmguts (60) an der Unterseite stützendes, vorzugsweise zustellbares oder zuschaltbares Führungsmittel angeordnet ist.

11. Ladegerät nach einem der Ansprüche 1 bis 9, **dadurch gekennzeichnet, dass** der Kratzboden (10) zur Entladeöffnung des Laderaumes (2) hin in einer Führungsanordnung längsverstellbar ist.

12. Ladegerät nach einem der Ansprüche 1 bis 10, **dadurch gekennzeichnet, dass** der Förderrotor (13) und/oder dem Entladestrom des Halmguts (60) mit der Rückseite zugestellte Messer (30) die Führungsmittel bilden.

13. Ladegerät nach einem der Ansprüche 9 bis 12, mit einem den Laderaum (2) an der Heckseite begrenzenden Hecktor (50), das für das heckseitige Entladen des Laderaumes (2) um eine horizontale Achse hochschwenkbar ist, **dadurch gekennzeichnet, dass** das Schutzgitter (9) und das Hecktor (50) beim gemeinsamen Hochschwenken an der Unterseite verriegelt und bei die Entladeöffnung schliessendem Hecktor (50) voneinander entriegelbar sind.

14. Ladegerät nach einem der Ansprüche 1 bis 13, **dadurch gekennzeichnet, dass** die Fördertrommel (8) beidseits über ein Zugmittel (37) hydraulisch anheb- und absenkbar ist.

15. Ladegerät nach Anspruch 14, **dadurch gekennzeichnet, dass** die Fördertrommel (8) beidseits an mit einem Traggestell des Laderaumes (2) verbundenen Schwenkarmen (31, 32) anheb- und absenkbar ist.

16. Ladegerät nach Anspruch 14 und/oder 15, **dadurch gekennzeichnet, dass** das Zugmittel (37) als Kette oder Seil ausgebildet ist.

17. Ladegerät nach einem der Ansprüche 2 bis 16, **dadurch gekennzeichnet, dass** das zum Öffnen und Schliessen des Laderaumes (2) mit dem Schutzgitter (9) verriegelte Hecktor (50) beidseits des Laderaumes (2) durch ein Hebelgetriebe (41) hydraulisch betätigbar ist.

18. Ladegerät nach Anspruch 17, **dadurch gekennzeichnet, dass** die Hebelgetriebe (41) jeweils an der Aussenseite gegenüberliegender Seitenwände (42, 43) des Laderaumes (2) angeordnet und durch eine dem Hecktor (50) zugeordnete obere Verbindungstraverse (44) verbunden sind.

19. Ladegerät nach einem der Ansprüche 1 bis 18, **dadurch gekennzeichnet, dass** den Förderzinken (7) der Fördertrommel (8) in Rotationsrichtung betrachtet ein radial abstehender Stützfinger (20) geringerer Länge als die Förderzinken (7) vorgeschaltet ist.

20. Ladegerät nach einem der Ansprüche 1 bis 19, mit einer den Laderaum (2) am oberen Ende begrenzenden, aus Seilen (47) gebildeten Laderaumbegrenzung (48), die einenends am oberen Ende einer vorderen Laderaumwand befestigt ist, und einer hinteren, flexiblen Laderaumdecke (52), die einenends mit dem oberen Ende des Hecktors (50) verbunden ist, **dadurch gekennzeichnet, dass** das jeweils andere Ende der Laderaumbegrenzung (48) und der hinteren Laderaumdecke (52) an einem mittels Gasdruckfedern (55) zum Entspannen und zum Spannen verstellbaren Befestigungsrohr (51) einer Spannvorrichtung (49) befestigt ist.
